# EUROPÄISCHE PATENTSCHRIFT

(11) **EP 4 204 245 B1**
(45) Veröffentlichungstag und Bekanntmachung des Hinweises auf die Patenterteilung: **02.10.2024**
(21) Anmeldenummer: 21755899.8
(22) Anmeldetag: 23.07.2021
(51) Int. Cl.: B60H 1/24, F24F 9/00, B60N 2/56, A62B 18/00, B60N 2/879, F24F 8/10

(54) **KRAFTFAHRZEUG MIT EINER VORRICHTUNG ZUM GEZIELTEN ABFÜHREN VON TRÖPFCHEN UND/ODER PARTIKELN**
MOTOR VEHICLE COMPRISING AN APPARATUS FOR THE DIRECTED DISCHARGING OF DROPLETS AND/OR PARTICLES
VÉHICULE AUTOMOBILE COMPRENANT UN APPAREIL D'ÉVACUATION DIRIGÉE DE GOUTTELETTES ET/OU DE PARTICULES

(30) Priorität: 25.08.2020 DE 102020005186
(43) Veröffentlichungstag der Anmeldung: 05.07.2023
(73) Patentinhaber: Mercedes-Benz Group AG, 70372 Stuttgart (DE)
(72) Erfinder: CURRLE, Joachim, 70327 Stuttgart (DE); BRAIG, Johannes, 70180 Stuttgart (DE)
(74) Vertreter: Novagraaf Group
(86) Internationale Anmeldenummer: PCT/EP2021/070700
(87) Internationale Veröffentlichungsnummer: WO 2022/042965

(56) Entgegenhaltungen:
- EP-A2- 0 543 289
- CN-A- 107 676 918
- JP-A- 2001 239 820
- JP-A- H05 278 452
- US-A- 3 511 162
- US-A1- 2014 102 442

## Beschreibung

Die WO 03/086125 A1 offenbart eine Einrichtung zum Erzeugen eines Luftvorhangs über ein Gesicht einer Person. Dabei ist die Einrichtung eine Kopfgarnitur, die am Kopf der Person befestigt werden kann. Der DE 92 09 893 U1 ist ein System zum kontrollierten Zuführen oder Abführen von Atemluft als bekannt zu entnehmen. Außerdem offenbart die DE 600 35 042 T2 eine Gesichtsmaske.

In der JP 2020-99 580 A wird eine Vorrichtung zur Verfügung gestellt, die in einem Fahrzeug mit einer Vielzahl von Sitzen, die in der Vorwärts-Rückwärts-Richtung und der Links-Rechts-Richtung ausgerichtet sind, zur Unterdrückung von Infektionen zwischen einer Vielzahl von Fahrgästen angebracht ist. Die Vorrichtung umfasst eine eine Luftbarriere bildende Einheit, die eine Einlassöffnung zum Ansaugen von Luft von der Rückseite, einen Luftreinigungsmechanismus, der die von der Einlassöffnung angesaugte Luft reinigt, um saubere Luft zu erhalten, und einen Luftauslass umfasst, aus dem saubere Luft zur Vorderseite geblasen wird, und die in der Lage ist, die saubere Luft aus dem Luftauslass in einem geschichteten Zustand senkrecht zur Links-Rechts-Richtung zu blasen. Die eine Luftbarriere bildende Einheit ist am seitlichen Ende einer Rückenlehne von jedem einer Vielzahl von Sitzen angeordnet und so angeordnet, dass sie in der Vorwärts-Rückwärts-Richtung gegenüberliegt. Der Lufteinlass der Luftbarrierebildungseinheit an der Vorderseite kann Luft einschließlich der sauberen Luft ansaugen, die aus dem Luftauslass der Luftbarrierebildungseinheit an der Vorderseite ausgeblasen wird. Die JP H05 278452 A offenbart ein Fahrzeugklimatisierungssystem. Die EP 0 543 289 A2 offenbart ein System zum Klimatisieren eines Sitzes. Die JP 2001 239820 A offenbart eine Fahrzeugluftreinigungsvorrichtung mit einem Luftstrom in vertikaler Richtung in der Y-Z Ebene des Fahrzeugs. Die US 2014/102442 A1 offenbart ein Gesichtszubehörsystem. Die CN 107 676 918 A offenbart eine Schutzeinrichtung zum Generieren eines Luftvorhangs. Die US 3 511 162 A offenbart ein Gerät zum Isolieren einer Patientenzone.

Aufgabe der vorliegenden Erfindung ist es, ein Kraftfahrzeug sowie ein Verfahren zu schaffen, sodass Tröpfchen beziehungsweise Partikel besonders vorteilhaft abgeführt werden können.

Diese Aufgabe wird durch ein Kraftfahrzeug mit den Merkmalen des Patentanspruchs 1 sowie durch ein Verfahren mit den Merkmalen des Patentanspruchs 7 gelöst. Vorteilhafte Ausgestaltungen mit zweckmäßigen Weiterbildungen der Erfindung sind in den übrigen Ansprüchen angegeben.

Offenbart ist ein nicht zur Erfindung gehörender erster Aspekt, welcher eine Vorrichtung zum gezielten Abführen von Tröpfchen und/oder Partikeln betrifft. Insbesondere können unter den Tröpfchen beziehungsweise Partikeln solche Tröpfchen beziehungsweise Partikel verstanden werden, welche einen Durchmesser von mehr als fünf Mikrometern aufweisen. Weiterhin können unter den Partikeln beziehungsweise Tröpfchen solche Partikel beziehungsweise Tröpfchen verstanden werden, welche einen Durchmesser von weniger als fünf Mikrometern aufweisen und somit beispielsweise in Aerosolen zum Einsatz kommen. Wie hinlänglich bekannt ist, ist ein Aerosol ein heterogenes Gemisch, welches feste Schwebeteilchen und/oder flüssige Schwebeteilchen und ein Gas umfassen, in welchem die Schwebeteilchen, insbesondere verteilt, aufgenommen oder angeordnet sind. Somit handelt es sich beispielsweise bei den Tröpfchen beziehungsweise Partikeln um die flüssigen beziehungsweise festen Schwebeteilchen. Die Vorrichtung weist wenigstens eine Ausströmöffnung sowie wenigstens ein Gebläse auf, welches vorzugsweise elektrisch betreibbar ist. Mittels des Gebläses kann Luft durch die Ausströmöffnung hindurch gefördert werden, wodurch mittels der Vorrichtung ein durch die mittels des Gebläses geförderte und insbesondere durch die Ausströmöffnung hindurch geförderte Luft gebildeter, gezielt gerichteter und sich vor einem Mund- und Nasebereich einer Person ausbildender Luftvorhang zum Abführen der Tröpfchen, insbesondere aus dem Mund- und Nasebereich und/oder aus einem vor dem Mund- und Nasebereich der Person angeordneten Bereich bereitstellbar ist. Mit anderen Worten kann mittels der Vorrichtung dadurch, dass mittels des Gebläses der Vorrichtung die Luft gefördert und dadurch durch die Ausströmöffnung hindurch gefördert wird, der Luftvorhang, der durch die mittels des Gebläses geförderte Luft gebildet wird, gezielt gerichtet bereitgestellt werden, derart, dass der Luftvorhang gezielt auf- beziehungsweise in den Mund- und Nasebereich gerichtet ist und/oder derart gezielt relativ zu dem Mund- und Nasebereich ausgerichtet ist, dass der Luftvorhang vor dem Mund- und Nasebereich und somit vor dem Mund und der Nase der Person vorbeiströmt, insbesondere derart, dass die den Luftvorhang bildende Luft den Mund und die Nase berührt oder aber von Mund und Nase beabstandet ist. Dadurch kann der Luftvorhang Tröpfchen und/oder Partikel aus dem Mund- und Nasebereich und/oder aus dem zuvor genannten, vor dem Mund- und Nasebereich angeordneten Bereich abführen, sodass beispielsweise der Luftvorhang Tröpfchen und/oder Partikel davon abhalten kann, zu dem beziehungsweise in den Mund- und Nasebereich und somit zu der Nase und zu dem Mund und in die Nase und in den Mund gelangen können.

Um nun die Tröpfchen beziehungsweise Partikel besonders vorteilhaft aus dem Mund- und Nasebereich und/oder aus dem davor angeordneten Bereich abführen und dadurch beispielsweise von dem Mund und der Nase der Person besonders effektiv und effizient abhalten beziehungsweise fernhalten zu können, ist es vorgesehen, dass die Vorrichtung wenigstens ein Sammelelement mit wenigstens einer der Ausströmöffnung gegenüberliegenden Auffangöffnung aufweist, mittels welcher zumindest ein Teil des Luftvorhangs und dadurch zumindest ein Teil der mittels des Luftvorhangs abgeführten und gezielt zu der Auffangöffnung hin geführten Tröpfchen und/oder Partikel gezielt auffangbar ist. Hierunter ist insbesondere zu verstehen, dass zumindest der Teil des Luftvorhangs und somit zumindest der Teil der Tröpfchen beziehungsweise der Partikel die Auffangöffnung durchströmen und somit über die Auffangöffnung in das Sammelelement einströmen können. Dadurch verbleiben die Partikel beziehungsweise Tröpfchen nicht unkontrolliert im Innenraum und können somit nicht erneut zurück zu der Person oder zu einer anderen Person gelangen, sondern die Tröpfchen beziehungsweise Partikel können gezielt abgeführt und somit beispielsweise von einer Person und auch von anderen Personen ferngehalten werden. Dadurch kann ein Ansteckungsrisiko besonders gering gehalten werden. Der Erfindung liegen insbesondere die folgenden Erkenntnisse zugrunde: Viele Krankheiten können durch Tröpfcheninfektion über die Atemluft übertragen werden, wie zum Beispiel das neuartige Corona-Virus. Sowohl in Tröpfchen mit einem Durchmesser von mehr als fünf Mikrometern als auch in Tröpfchen von Aerosolen, deren Tröpfchen in der Regel weniger als fünf Mikrometer Durchmesser aufweisen, können sich Krankheitserreger befinden, die mittels der Tröpfchen mitgeführt werden. Nach neusten Erkenntnissen tragen Tröpfchen mit einem Durchmesser von mehr als fünf Mikrometern und Tröpfchen von Aerosolen und somit mit einem Durchmesser von weniger als fünf Mikrometern zu ungefähr gleichen Teilen zu Infektionen bei. Im Folgenden werden die Tröpfchen und die Partikel zusammenfassend auch als Teilchen bezeichnet, wobei unter großen Teilchen insbesondere solche Tröpfchen beziehungsweise Partikel zu verstehen sind, die einen Durchmesser von mehr als fünf Mikrometern aufweisen, und unter kleinen Teilchen sind insbesondere solche Tröpfchen beziehungsweise Partikel zu verstehen, welche einen Durchmesser von weniger als fünf Mikrometern aufweisen. Während große Teilchen aufgrund ihres Eigengewichts relativ schnell in vertikaler Richtung nach unten absinken und sich somit relativ schnell nach unten absetzen, bleiben die kleinen Teilchen sehr lange in der Luft. Die kleinen Teilchen weisen eine wesentlich geringere Masse als die großen Teilchen auf und können sich in einem Raum wie beispielsweise in einem Innenraum eines Kraftfahrzeugs mit in dem Raum vorhandenen Luftströmungen mitbewegen. Insbesondere in einem Innenraum eines Kraftfahrzeugs können Luftströme im Vergleich zu einem geschlossenen Raum in einem Gebäude mit deutlich größeren Luftgeschwindigkeiten strömen, wodurch die Teilchen schnell im gesamten Innenraum verteilt werden können.

Ein Kraftfahrzeug weist üblicherweise wenigstens einen auch als Luftdüse bezeichneten Luftausströmer auf, über welchen dem Innenraum Luft zugeführt wird, um dadurch den Innenraum zu belüften. Hierbei wird der Luftausströmer von Luft durchströmt, welche eine auch als Luftfreistrahl bezeichnete Luftströmung bildet. Der Luftfreistrahl weist insbesondere im Bereich des Luftausströmers eine hohe Geschwindigkeit beziehungsweise Strömungsgeschwindigkeit auf, die zu einer starken Beschleunigung von beispielsweise mit Atemluft einer Person ausgestoßenen Teilchen und somit Krankheitserregern führen kann. Aktuelle Filtersysteme von Kraftfahrzeugen, insbesondere von Klimaanlagen von Kraftfahrzeugen, können Teilchen in angesaugter beziehungsweise geförderter Luft, insbesondere Frisch- oder Umluft, filtern, wobei diese Filtersysteme üblicherweise nur solche Abscheidegrade aufweisen, die Kleinstpartikel beziehungsweise die zuvor beschriebenen, kleinen Teilchen nicht oder nur unzureichend aus der Luft herausfiltern, das heißt aus der Luft abscheiden können. Unabhängig von erzielbaren Abscheidegraden für kleine Teilchen beziehungsweise Kleinstpartikeln ist nachteilig, dass Teilchen, die mit der Atemluft ausgestoßen werden, erst nach längerem Aufenthalt in dem Innenraum diesen entweder durch eine Entlüftung verlassen oder mit einer Umluft aus dem Innenraum abgesaugt und einem Filter zugeführt werden. Vor diesem Hintergrund ermöglicht es nun die Erfindung, die Teilchen an dem Ort ihrer Entstehung beziehungsweise Freisetzung, das heißt im Bereich der Nase und des Munds der Person, die beispielsweise ein sich im Innenraum eines Kraftfahrzeugs aufhaltender Insasse ist, durch eine Zwangsströmung in Richtung der Auffangöffnung zu führen und über die Auffangöffnung abzuführen. Die zuvor genannte Zwangsströmung ist dabei der Luftvorhang beziehungsweise die den Luftvorhang bildende und somit, insbesondere von der Ausströmöffnung hin zu der Auffangöffnung, strömende Luft, welche die Teilchen aus dem Mund- und Nasebereich und/oder aus dem davor angeordneten Bereich abführt, hin zu der Aufnahmeöffnung führt und insbesondere durch die Auffangöffnung hindurch führt und somit in das auch als Auffangelement bezeichneten Sammelelement hinein fördert.

Die Ausströmöffnung ist beispielsweise in einer Ausströmfläche angeordnet oder wird auch als Ausströmfläche bezeichnet, an welcher oder über welche die Vorrichtung die mittels des Gebläses geförderte Luft bereitstellen kann. Die Auffangöffnung wird beispielsweise auch als Sammelöffnung bezeichnet und ist an einer oder in einer Sammelfläche angeordnet, über welche das Sammelelement (Auffangelement) zumindest den Teil des Luftvorhangs und somit zumindest den Teil der Teilchen auffangen und insbesondere aufnehmen kann. Die Sammelfläche beziehungsweise die Auffangöffnung kann beispielsweise Teil einer Fahrzeuginnenraumberandung, das heißt beispielsweise in einer Fahrzeuginnenraumberandung ausgebildet sein. Unter der Fahrzeuginnenraumberandung ist insbesondere ein Innenverkleidungselement zu verstehen, mittels welchem der Innenraum des vorzugsweise als Kraftwagen, insbesondere als Personenkraftwagen, ausgebildeten Kraftfahrzeugs zumindest teilweise, insbesondere direkt, begrenzt beziehungsweise berandet ist. Durch die Zwangsströmung werden die Teilchen zu der Sammelfläche beziehungsweise zu der Auffangöffnung transportiert und dort abgeführt und beispielsweise abgeschieden. Die aufgegangenen Teilchen können nicht zu der Person zurück gelangen und auch nicht zu einer anderen, sich gegebenenfalls im Innenraum aufhaltenden Person gelangen, sodass ein Infektionsrisiko, insbesondere während einer Fahrt des Kraftfahrzeugs, in einem besonders geringen Rahmen gehalten werden kann.

Vorzugsweise ist Ausströmöffnung in Strömungsrichtung des zu dem Sammelelement beziehungsweise der Auffangöffnung hin strömenden Luftvorhangs durch die Auffangöffnung zumindest teilweise, insbesondere zumindest überwiegend oder vollständig, überlappt, wodurch die Teilchen besonders gut aufgefangen beziehungsweise gesammelt werden können.

Um die Teilchen besonders effektiv und effizient abführen zu können, ist es in einer vorteilhaften Ausgestaltung vorgesehen, dass das Sammelelement ein zusätzlich zu dem Gebläse vorgesehenes, weiteres Gebläse aufweist, wobei die vorigen und folgenden Ausführungen zu dem ersten Gebläse ohne Weiteres auch auf das weitere Gebläse übertragen werden können und umgekehrt. Ist im Folgenden die Rede von dem Gebläse, so ist darunter - falls nichts anderes angegeben ist - das erste Gebläse zu verstehen. Mittels des weiteren Gebläses sind zumindest der Teil des Luftvorhangs und dadurch zumindest der Teil der mittels des Luftvorhangs abgeführten und gezielt zu der Auffangöffnung hin geführten Tröpfchen und/oder Partikel (Teilchen) in die Aufnahmeöffnung einsaugbar. Mit anderen Worten kann mittels des Weiteren Gebläses Luft eingesaugt und dadurch gefördert werden. Insbesondere kann mittels des weiteren Gebläses Luft aus einer Umgebung des Sammelelements angesaugt und dadurch durch die Auffangöffnung hindurch gefördert und somit in das Sammelelement (Auffangelement) eingesaugt werden, sodass mittels des weiteren Gebläses zumindest der Teil des Luftvorhangs und somit zumindest der Teil der Teilchen aus der Umgebung der Auffangöffnung in die Auffangöffnung eingesaugt und somit durch die Auffangöffnung hindurch gesaugt werden kann.

Eine weitere Ausführungsform zeichnet sich dadurch aus, dass das Sammelelement ein Filterelement zum Filtern zumindest des mittels der Auffangöffnung aufgefangenen Teils des Luftvorhangs aufweist, Im Folgenden wird der Teil des Luftvorhangs als Luftvorhangteil bezeichnet. Somit kann zumindest der Luftvorhangteil, welcher die Auffangöffnung durchströmt und somit in das Sammelelement einströmt und dadurch aufgefangen wird, das Filterelement durchströmen und mittels des Filterelements gefiltert werden, wodurch die Teilchen besonders vorteilhaft von Personen ferngehalten werden können.

Dabei hat es sich als besonders vorteilhaft gezeigt, wenn das Filterelement dazu ausgebildet ist, Tröpfchen und/oder Partikel mit einem Durchmesser von weniger als fünf Mikrometern zurückzuhalten und dadurch aus dem aufgefangenen Luftvorhangteil herauszufiltern. Hierdurch kann beispielsweise sicher und effektiv vermieden werden, dass die gegebenenfalls infektiösen Teilchen zu der Person oder zu einer anderen Person gelangen, sodass das Infektionsrisiko in einem besonders geringen Rahmen gehalten werden kann.

Dabei hat es sich als besonders vorteilhaft gezeigt, wenn das Filterelement insbesondere in Strömungsrichtung des mittels des weiteren Gebläses über die Auffangöffnung in das Sammelelement eingesaugten und dadurch geförderten Luftvorhangteils stromab des weiteren Gebläses angeordnet ist. Dadurch kann eine sichere Filterung des Luftvorhangteils beziehungsweise der durch den Luftvorhangteil gebildeten Luft gewährleistet werden.

Um die Teilchen besonders gezielt und sicher abführen zu können, ist es in weiterer Ausgestaltung vorgesehen, dass die Auffangöffnung durch ein insbesondere als Festkörper ausgebildetes Leitungselement gebildet beziehungsweise begrenzt ist. Dabei hat es sich als besonders vorteilhaft gezeigt, wenn die Vorrichtung wenigstens ein oder mehrere Luftleitelemente aufweist. Das Luftleitelement ist relativ zu dem Leitungselement bewegbar, insbesondere verschwenkbar, wodurch mittels des Luftleitelements eine Strömungsrichtung der die Ausströmöffnung durchströmenden, das heißt mittels des Gebläses geförderten und den Luftvorhang bildenden Luft variierbar, das heißt einstellbar ist. Vorzugsweise ist das Luftleitelement eigensteif beziehungsweise formstabil ausgebildet. Beispielsweise kann das Luftleitelement als eine insbesondere eigensteife beziehungsweise formstabile Lamelle ausgebildet sein, welche eine Längserstreckungsrichtung aufweist. Beispielsweise verläuft die Längserstreckungsrichtung der Lamelle senkrecht zur Strömungsrichtung der mittels des ersten Gebläses geförderten Luft.

Die Erfindung zeichnet sich dadurch aus, dass die Ausströmöffnung und die Auffangöffnung im Innenraum eines Kraftfahrzeugs angeordnet sind. Das Kraftfahrzeug weist somit die Vorrichtung auf. Dieser Ausführungsform liegt insbesondere die Erkenntnis zugrunde, dass insbesondere Innenräume von Kraftfahrzeugen, insbesondere von Kraftwagen, im Vergleich zu großen Räumen von Gebäuden klein und insbesondere in sich geschlossene Räume sein können, in denen sich gegebenenfalls infektiöse Teilchen - falls keine entsprechenden Gegenmaßnahmen getroffen sind - schnell ausbreiten können. Eine solche, ungehinderte und schnelle Ausbreitung von gegebenenfalls infektiösen und beispielsweise von einer Person ausgestoßenen Teilchen kann nun durch die Erfindung effektiv und effizient vermieden werden, sodass das Infektionsrisiko im Innenraum des vorzugsweise als Kraftwagen, insbesondere als Personenkraftwagen, ausgebildeten Kraftfahrzeugs in einem besonders geringen Rahmen gehalten werden kann.

Um die Ausströmöffnung und/oder die Auffangöffnung in besonders enger Nähe zu dem Mund- und Nasebereich der Person anordnen und somit die Teilchen gezielt abführen zu können, ist es in weiterer Ausgestaltung vorgesehen, dass die Ausströmöffnung und/oder die Auffangöffnung, insbesondere ein die Ausströmöffnung beziehungsweise die Auffangöffnung, insbesondere direkt, begrenzendes Kanalelement, an einer im Innenraum des Kraftfahrzeugs angeordneten Sitzanlage oder an einem den Innenraum, insbesondere direkt, begrenzenden Innenverkleidungselement, des Kraftfahrzeugs angeordnet ist. Das zuvor genannte, die Ausströmöffnung, insbesondere direkt, begrenzende Kanalelement kann beispielsweise das zuvor genannte Leitungselement sein.

Eine weitere nicht erfindungsgemäße Ausführungsform zeichnet sich dadurch aus, dass die Vorrichtung eine für sich alleine betrachtet zusammengebaute Einheit ist, welche für sich alleine betrachtet am Kopf der Person reversibel lösbar befestigbar ist. Die Person kann somit die Vorrichtung im am Kopf der Person befestigten Zustand der Vorrichtung tragen und mit sich führen, sodass Teilchen sowohl dann abgeführt werden können, wenn sich die Person im Innenraum des Kraftfahrzeugs befindet, als auch dann, wenn sich die Person außerhalb des Innenraums des Kraftfahrzeugs befindet und beispielsweise umherläuft. Dadurch kann das Infektionsrisiko auch in anderen Räumen als dem Innenraum des Kraftfahrzeugs besonders gering gehalten werden.

Ein zur Erfindung gehörender zweiter Aspekt betrifft ein vorzugsweise als Kraftwagen, insbesondere als Personenkraftwagen, ausgebildetes Kraftfahrzeug, mit wenigstens einem im Innenraum des Kraftfahrzeugs angeordneten Sitzplatz für eine auch als Insasse des Kraftfahrzeugs bezeichnete Person. Dies bedeutet, dass sich die Person auf den Sitzplatz setzen und sich somit im Innenraum aufhalten kann, insbesondere während einer Fahrt des Kraftfahrzeugs. Der Sitzplatz ist beispielsweise durch eine im Innenraum angeordnete Sitzanlage gebildet, welche eine Sitzbank oder aber ein Einzelsitz sein kann. Um dabei Tröpfchen und/oder Partikel besonders effektiv und effizient abführen und somit das Infektionsrisiko im Innenraum des Kraftfahrzeugs besonders gering halten zu können, ist es bei dem zweiten Aspekt vorgesehen, dass das Kraftfahrzeug wenigstens eine Vorrichtung zum gezielten Abführen von Tröpfchen und/oder Partikeln (Teilchen) umfasst. Die Vorrichtung weist wenigstens eine im Innenraum des Kraftfahrzeugs angeordnete, das heißt in den Innenraum mündende Ausströmöffnung, sowie wenigstens ein Gebläse auf, mittels welchem Luft durch die Ausströmöffnung hindurch gefördert werden kann. Hierdurch kann die Vorrichtung in dem Innenraum einen durch die mittels des Gebläses geförderte Luft gebildeten, gezielt gerichteten und sich vor einem Mund- und Nasebereich der auf dem Sitzplatz sitzenden Person ausbildenden Luftvorhang bereitstellen, mittels welchem Tröpfchen und/oder Partikel, insbesondere aus dem Mund- und Nasebereich und/oder aus einem vor dem Mund- und Nasebereich angeordneten Bereich, abgeführt werden können. Dadurch können die zusammenfassend auch als Teilchen bezeichneten Partikel und/oder Tröpfchen von dem Mund und der Nase der Person ferngehalten beziehungsweise davon gezielt abgeführt werden, sodass sich beispielsweise gegebenenfalls andere, in dem Innenraum aufhaltende Personen nicht durch die von der ersten Person ausgestoßenen Teilchen anstecken kann. Vorteile und vorteilhafte Ausgestaltungen des ersten Aspekts sind als Vorteile und vorteilhafte Ausgestaltungen des zweiten Aspekts anzusehen und umgekehrt.

Bei dem zweiten Aspekt weist die Vorrichtung wenigstens ein Sammelelement mit wenigstens einer der Ausströmöffnung gegenüberliegenden und in dem Innenraum angeordneten Auffangöffnung auf, mittels welcher zumindest ein Teil des Luftvorhangs und dadurch zumindest ein Teil der mittels des Luftvorhangs abgeführten und gezielt zu der Auffangöffnung hin geführten Tröpfchen und/oder Partikel gezielt auffangbar sind. Der Luftvorhang, dessen Strömungsrichtung in Fahrzeugquerrichtung und dabei zu der der Ausströmöffnung in Fahrzeugquerrichtung gegenüberliegenden Auffangöffnung hin verläuft, verläuft in einer Ebene, welche durch die Fahrzeugquerrichtung des Kraftfahrzeugs und die Fahrzeughochrichtung des Kraftfahrzeugs aufgespannt ist.

Ein zur Erfindung gehörender dritter Aspekt betrifft ein Verfahren zum Betreiben eines Kraftfahrzeugs gemäß dem zweiten Aspekt. Das Verfahren umfasst somit insbesondere, dass mittels des Gebläses Luft gefördert wird, die die Ausströmöffnung durchströmt, sodass die Vorrichtung einen durch die mittels des Gebläses geförderte Luft gebildeten, gezielt gerichteten und sich vor einem Mund- und Nasebereich einer Person ausbildenden Luftvorhang zum Abführen von Tröpfchen und/oder Partikeln bereitstellt. Der Luftvorhang beziehungsweise dessen Strömungsrichtung verläuft erfindungsgemäß in einer Ebene, welche durch die Fahrzeugquerrichtung und die Fahrzeughochrichtung aufgespannt ist. Erfindungsgemäß verläuft der Luftvorhang beziehungsweise dessen Strömungsrichtung in Fahrzeugquerrichtung.

Weitere Vorteile und Einzelheiten der Erfindung ergeben sich aus der nachfolgenden Beschreibung bevorzugter Ausführungsbeispiele sowie anhand der Zeichnung.

Die Zeichnung zeigt in:
- Fig. 1: eine schematische Perspektivansicht einer ersten Ausführungsform einer Vorrichtung zum gezielten Abführen von Tröpfchen und/oder Partikeln;
- Fig. 2: eine schematische Perspektivansicht der Vorrichtung gemäß einer zweiten Ausführungsform, wobei sich ein Leitungselement der Vorrichtung in einer Gebrauchsstellung befindet;
- Fig. 3: eine schematische Perspektivansicht der Vorrichtung gemäß der zweiten Ausführungsform, wobei sich das Leitungselement in einer Verstaustellung befindet;
- Fig. 4: eine schematische Perspektivansicht der Vorrichtung gemäß einer dritten Ausführungsform, wobei sich die Leitungselemente der Vorrichtung in einer Gebrauchsstellung befinden;
- Fig. 5: eine schematische Perspektivansicht der Vorrichtung gemäß der dritten Ausführungsform, wobei sich die Leitungselemente in einer Verstaustellung befinden;
- Fig. 6: eine schematische Perspektivansicht einer nicht erfindungsgemäßen vierten Ausführungsform der Vorrichtung;
- Fig. 7: eine schematische und geschnittene Seitenansicht der Vorrichtung gemäß einer nicht erfindungsgemäßen fünften Ausführungsform;
- Fig. 8: eine schematische Schnittansicht der Vorrichtung gemäß der fünften Ausführungsform entlang einer in Fig. 7 gezeigten Schnittlinie A-A; und
- Fig. 9: ausschnittsweise eine schematische und geschnittene Seitenansicht der Vorrichtung gemäß einer nicht erfindungsgemäßen sechsten Ausführungsform

In den Fig. sind gleiche oder funktionsgleiche Elemente mit gleichen Bezugszeichen versehen.

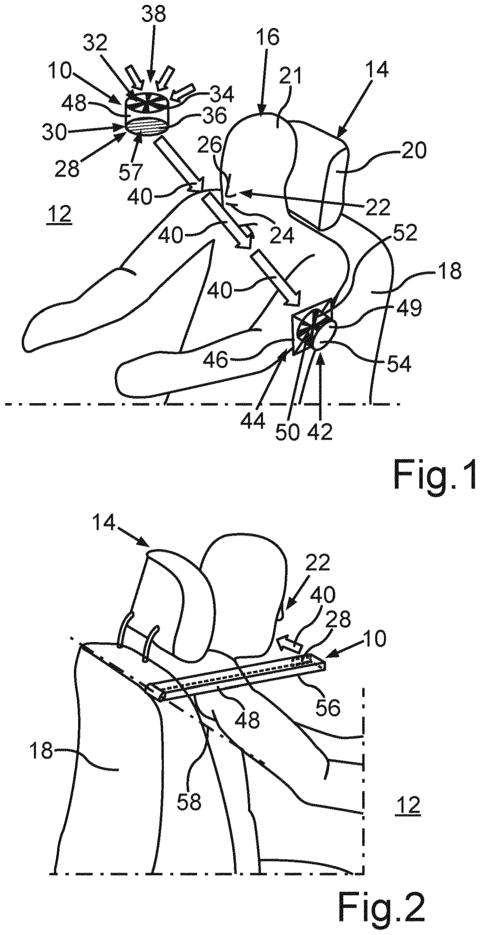

Fig. 1 zeigt in einer schematischen Perspektivansicht eine erste Ausführungsform einer Vorrichtung 10 zum gezielten Abführen von Tröpfchen und/oder Partikeln. Im Folgenden werden die Tröpfchen und die Partikel zusammenfassend auch als Teilchen bezeichnet, sodass dann, wenn im Folgenden die Rede von Teilchen ist, darunter die Tröpfchen und/oder die Partikel zu verstehen sind. Insbesondere ist in Fig. 1 ausschnittsweise ein

Innenraum 12 eines vorzugsweise als Kraftwagen, insbesondere als Personenkraftwagen, ausgebildeten Kraftfahrzeugs erkennbar, wobei die Vorrichtung 10 das Kraftfahrzeug umfassen kann beziehungsweise umgekehrt, sodass zumindest ein Teil der Vorrichtung 10 im Innenraum des Kraftfahrzeugs angeordnet sein kann. Aus Fig. 1 ist erkennbar, dass im Innenraum 12 des Kraftfahrzeugs eine vorliegend als Einzelsitz ausgebildete Sitzanlage 14 angeordnet ist, welche wenigstens oder genau einen Sitzplatz für eine auch als Insasse bezeichnete Person 16 bereitstellt. Die Person 16 sitzt auf dem Sitzplatz und somit auf der Sitzanlage 14. Die Sitzanlage 14 weist eine Rückenlehne 18 auf, gegen die die Person 16 ihren Rücken lehnen kann. Außerdem umfasst die Sitzanlage 14 eine Kopfstütze 20, gegen die die Person 16 ihren Kopf 21 lehnen kann. Außerdem ist in Fig. 1 ein Mund- und Nasebereich 22 der Person 16 erkennbar, in deren Mund- und Nasebereich 22 der Mund 24 und die Nase 26 der Person 16 angeordnet sind.

Die Person 16 kann durch ihre Nase 26 und durch ihren Mund 24 atmen, insbesondere ein- und ausatmen, sodass die Person 16 über ihre Nase 26 und über ihren Mund 24 Tröpfchen und/oder Partikel, das heißt Teilchen, ausatmen und somit ausstoßen kann. Die Tröpfchen und die Partikel können beispielsweise zusammen mit im Innenraum 12 angeordneter Luft ein Aerosol bilden, derart, dass die Teilchen in der Luft verteilt sind. Wie im Folgenden noch genauer erläutert wird, kann mittels der Vorrichtung 10 vermieden werden, dass sich die Teilchen übermäßig schnell im gesamten Innenraum 12 verteilen können. Hierzu umfasst die Vorrichtung 10 wenigstens eine Ausströmöffnung 28, welche beispielsweise an oder in einer Ausströmfläche 30 angeordnet beziehungsweise ausgebildet ist. Des Weiteren umfasst die Vorrichtung 10 ein auch als Hilfsgebläse bezeichnetes Gebläse 32, welches insbesondere zusätzlich zu einem zum Belüften des Innenraums 12 vorgesehenen Hauptgebläse einer Belüftungseinrichtung, insbesondere einer Klimaanlage, des Kraftfahrzeugs vorgesehen ist. Das Gebläse 32 umfasst ein Lüfterrad 34, welches beispielsweise relativ zu einem Gehäuse 36 des Gebläses 32 drehbar ist. Durch Drehen des Lüfterrads 34 wird mittels des Gebläses 32 Luft gefördert und insbesondere durch die Ausströmöffnung 28 hindurch gefördert. Vorzugsweise ist das Gebläse 32 elektrisch betreibbar. Hierunter ist insbesondere zu verstehen, dass das Gebläse 32 einen in Fig. 1 nicht erkennbaren Elektromotor aufweist, mittels welchem das Lüfterrad 34 unter Nutzung von elektrischer Energie antreibbar und dadurch relativ zu dem Gehäuse 36 drehbar ist. Durch Drehen des Lüfterrads 34 saugt das Gebläse 32 Luft, insbesondere aus dem Innenraum 12, an, was in Fig. 1 durch Pfeile 38 veranschaulicht ist. Die mittels des Gebläses 32 zunächst angesaugte und dadurch geförderte Luft wird durch die Ausströmöffnung 28 hindurch gefördert und von dem Gebläse 32 weg gefördert, derart, dass mittels der Vorrichtung 10 ein durch die mittels des Gebläses 32 geförderte Luft gebildeter, gezielt gerichteter und sich vor dem Mund- und Nasebereich 22 der Person 16 ausbildender, in Fig. 1 durch Pfeile 40 veranschaulichter Luftvorhang zum Abführen von Tröpfchen und/oder Partikeln, insbesondere aus dem Mund- und Nasebereich 22 und/oder aus einem vor dem Mund- und Nasebereich 22 angeordneten Bereich bereitstellbar ist beziehungsweise bereitgestellt wird. Insbesondere veranschaulichen die Pfeile 40 eine Strömungsrichtung, in die der Luftvorhang beziehungsweise die den Luftvorhang bildende Luft strömt. Dabei ist insbesondere aus Fig. 1 erkennbar, dass der Luftvorhang beziehungsweise dessen Strömungsrichtung in einer durch die Fahrzeugquerrichtung (y-Richtung) und die Fahrzeughochrichtung (z-Richtung) ausgebildeten Ebene und dabei beispielsweise parallel oder schräg zur Fahrzeugquerrichtung verläuft. Insbesondere ist es vorgesehen, dass die Ausströmöffnung 28 in Fahrzeughochrichtung derart angeordnet ist, dass die Ausströmöffnung 28 zumindest im Wesentlichen auf Höhe des Munds 24 und/oder der Nase 26 angeordnet ist. Außerdem ist die Ausströmöffnung 28 in enger Nähe zu dem Mund- und Nasebereich 22 und somit in nicht allzu großer Entfernung von der Nase 26 und dem Mund 24 angeordnet. Beispielsweise kann die Ausströmöffnung 28 beziehungsweise die Ausströmfläche 30 an einem Dachbereich des Kraftfahrzeugs angeordnet sein, wobei der Innenraum 12 in Fahrzeughochrichtung nach oben hin zumindest teilweise, insbesondere zumindest überwiegend oder vollständig, durch den Dachbereich begrenzt ist.

Um nun die Teilchen (Tröpfchen und/oder Partikel) effektiv und effizient abführen und somit eine übermäßig schnelle Verteilung der Teilchen im Innenraum 12 effektiv und effizient vermeiden zu können, weist die Vorrichtung 10 wenigstens ein Sammelelement 42 mit wenigstens einer oder mehreren, der Ausströmöffnung 28 gegenüberliegenden Auffangöffnung 44 auf, die beispielsweise an oder in einer Sammelfläche 46 angeordnet ist. Die Sammelfläche 46 verläuft beispielsweise in einer Ebene, welche durch die Fahrzeuglängsrichtung (x-Richtung) und die Fahrzeughochrichtung (z-Richtung) aufgespannt ist. Anhand der Pfeile 40 ist erkennbar, dass der Luftvorhang beziehungsweise die den Luftvorhang bildende Luft eine Zwangsströmung ist, welche in zumindest im Wesentlichen in Fahrzeugquerrichtung, insbesondere nach außen, verläuft und dabei insbesondere zu der Auffangöffnung 44 hin verläuft. Diese Zwangsströmung wird durch das Gebläse 32 erzeugt, das - wie durch die Pfeile 38 veranschaulicht ist - Luft in unmittelbarer Nähe der Ausströmöffnung 28 ansaugt und durch einen einfach auch als Kanal bezeichneten Luftkanal 48 hindurch fördert und somit über den Luftkanal 48 zu der Ausströmöffnung 28 fördert und in der Folge durch die Ausströmöffnung 28 hindurch fördert. Der Luftkanal 48 weist insbesondere die Ausströmöffnung 28 auf, über welche die mittels des Gebläses 32 geförderte und durch den Luftkanal 48 hindurch geförderte Luft aus dem Luftkanal 48 ausströmen kann. Der Luftkanal 48 und die Ausströmöffnung 28 sind jeweils, insbesondere direkt, durch ein vorzugsweise eigensteifes Leitungselement der Vorrichtung 10 gebildet beziehungsweise begrenzt. Bei der in Fig. 1 gezeigten ersten Ausführungsform ist das Leitungselement beispielsweise das Gehäuse 36 des Gebläses 32. Somit kann die mittels des Gebläses 32 geförderte Luft über die Ausströmöffnung 28 aus dem Gehäuse 36 ausströmen.

Das auch als Auffangelement bezeichneten Sammelelement 42 weist ein weiteres, vorzugsweise eigensteifes Leitungselement 49 auf, welches ein weiteres Gehäuse des Sammelelements 42 sein kann. Dabei ist die auch als Einlassöffnung bezeichnete Auffangöffnung 44, insbesondere direkt, durch das Leitungselement 49 begrenzt. Mittels der Auffangöffnung 44 können zumindest ein Teil des Luftvorhangs und dadurch zumindest ein Teil des mittels des Luftvorhangs abgeführten und gezielt zu der Auffangöffnung 44 hin geführten Tröpfchen und/oder Partikel gezielt aufgefangen werden, insbesondere derart, dass zumindest der auch als Luftvorhangteil bezeichnete Teil des Luftvorhangs und somit die mittels des Luftvorhangs zu der Auffangöffnung 44 geführten Teilchen die Auffangöffnung 44 durchströmen und somit über die Auffangöffnung 44 in das Sammelelement 42 und dabei insbesondere in das Leitungselement 49 einströmen können. Hierzu werden die Teilchen beispielsweise mittels des Luftvorhangteils durch die Auffangöffnung 44 hindurch transportiert und somit in das Sammelelement 42 beziehungsweise in das Leitungselement 49 hinein transportiert. Dadurch kann verhindert werden, dass die Teilchen zurück zu der Person 16 oder zu einer anderen, sich gegebenenfalls im Innenraum 12 aufhaltenden Person gelangen, sodass das Infektionsrisiko besonders gering gehalten werden kann.

Es ist erkennbar, dass die Auffangöffnung 44 der Ausströmöffnung 28 in Fahrzeugquerrichtung gegenüberliegt, da die zuvor genannte Zwangsströmung bei dem in Fig. 1 gezeigten Ausführungsbeispiel in Fahrzeugquerrichtung dabei nach außen verläuft. Mit anderen Worten, die mit der Atemluft ausgestoßenen Teilchen werden durch die Zwangsströmung von dem Mund- und Nasebereich 22 beziehungsweise von dem davor angeordneten Bereich weg gefördert und zu dem Sammelelement 42 gefördert und dabei durch die Auffangöffnung 44 hindurch gefördert.

Bei der ersten Ausführungsform weist das Sammelelement 42 ein zusätzlich zu dem Gebläse 32 und zusätzlich zu dem Hauptgebläse des Kraftfahrzeugs vorgesehenes, weiteres Gebläse 50 auf, auf welches die vorigen und folgenden Ausführungen zu dem Gebläse 32 übertragen werden können und umgekehrt. Dabei weist das Gebläse 50 ein weiteres Lüfterrad 52 auf, welches relativ zu dem Leitungselement 49, welches beispielsweise ein weiteres Gehäuse des Gebläses 50 ist, drehbar ist. Durch relativ zu dem Leitungselement 49 erfolgendes Drehen des Lüfterrads 52 saugt das Gebläse 50 Luft, insbesondere aus einer Umgebung der Auffangöffnung 44, an. Dabei kann das Gebläse 50 als ein elektrisches Gebläse ausgebildet sein und somit einen weiteren Elektromotor aufweisen, mittels welchem das Lüfterrad 52 angetrieben und somit relativ zu dem Leitungselement 49 gedreht werden kann. Mittels des weiteren Gebläses 50, insbesondere mittels des weiteren Lüfterrads 52, sind zumindest der zuvor beschriebene Luftvorhangteil und dadurch zumindest die mittels des Luftvorhangteils geförderten Teilchen in die Auffangöffnung 44 einsaugbar und somit durch die Auffangöffnung 44 hindurch förderbar und hierdurch über die Auffangöffnung 44 in das Sammelelement 42 einsaugbar beziehungsweise hinein förderbar. Beispielsweise können der über die Auffangöffnung 44 in das Sammelelement 42 eingesaugte Luftvorhangteil und somit die Teilchen mittels des weiteren Gebläses 50 durch das Sammelelement 42 (Auffangelement) und dabei insbesondere durch das Leitungselement 49 hindurch gefördert werden. Mit anderen Worten kann das Gebläse 50 die mit der als Querströmung ausgebildeten Zwangsströmung an dem Sammelelement 42 ankommenden Teilchen ansaugen und über die Auffangöffnung 44 einsaugen und beispielsweise aus dem Innenraum 12 abführen.

Bei der ersten Ausführungsform weist das Sammelelement 42 ein Filterelement 54 auf, mittels welchem der Luftvorhangteil beziehungsweise die den Luftvorhangteil bildende Luft, die über die Auffangöffnung 44 in das Sammelelement 42 hineinströmt und beispielsweise das Sammelelement 42 durchströmt, gefiltert werden kann, insbesondere derart, dass mittels des Filterelements 54 die in der den Luftvorhangteil bildenden Luft aufgenommenen und über die Auffangöffnung 44 in das Sammelelement 42 eingesaugten und somit aufgefangenen Teilchen aus der den Luftvorhangteil bildenden Luft herausgefiltert, das heißt abgeschieden werden. Hierzu ist beispielsweise das Filterelement 54 dazu ausgebildet, Tröpfchen und/oder Partikel mit einem Durchmesser von weniger als fünf Mikrometern zurückzuhalten und dadurch aus dem aufgefangenen Teil des Luftvorhangs herauszufiltern. In Strömungsrichtung des das Sammelelement 42 durchströmenden Luftvorhangs ist das Filterelement 54 stromab des Lüfterrads 52, das heißt hinter dem Lüfterrad 52 angeordnet. Beispielsweise kann die mittels des Filterelements 54 gefilterte Luft beziehungsweise die das Sammelelement 42 durchströmende Luft aus dem Sammelelement 42 ausströmen und, insbesondere über das Filterelement 54, wieder in den Innenraum 12 einströmen, oder aber die das Sammelelement 42 durchströmende Luft wird über eine an eine Umgebung des Kraftfahrzeugs mündende Auslassöffnung an die Umgebung des Kraftfahrzeugs abgelassen, sodass ein direktes Einleiten der das Sammelelement 42 durchströmenden Luft aus der Vorrichtung 10 in den Innenraum 12 unterbleibt.

Die Sammelfläche 46 beziehungsweise die Auffangöffnung 44 kann beispielsweise Teil einer Türverkleidung beziehungsweise in einer Türverkleidung ausgebildet sein, mittels welcher beispielsweise eine Tür, insbesondere eine Seitentür, des Kraftfahrzeugs zu dem Innenraum 12 hin zumindest teilweise verkleidet ist. Hierunter ist insbesondere zu verstehen, dass mittels der Türverkleidung ein Rohbau der Tür zu dem Innenraum 12 hin zumindest teilweise, insbesondere zumindest überwiegend oder vollständig, verkleidet ist.

Bei dem in Fig. 1 gezeigten Ausführungsbeispiel sind der Ausströmöffnung 28 verstellbare Leitelemente 57 zugeordnet, welche auch als Luftleitelemente bezeichnet werden. Die Leitelemente 57 sind relativ zu dem Gehäuse 36 verstellbar, insbesondere verschwenkbar, sodass durch relativ zu dem Gehäuse 36 erfolgendes Bewegen, insbesondere Verschwenken, der vorzugsweise eigensteifen Luftleitelemente eine Strömungsrichtung der die Ausströmöffnung 28 durchströmenden Luft variierbar ist. Mit anderen Worten kann dadurch, dass die Leitelemente 57 relativ zu dem Gehäuse 36 bewegt werden, eine Strömungsrichtung, in die die mittels des Gebläses 32 geförderte Luft die Ausströmöffnung 28 durchströmt und somit aus dem Gehäuse 36 ausströmt, verändert beziehungsweise variiert, das heißt eingestellt werden. Dadurch kann der Luftvorhang beziehungsweise die Zwangsströmung gezielt in Richtung der Nase 26 und des Mundes 24 des Insassen gerichtet werden. Beispielsweise wird das jeweilige Leitelement 57 in Abhängigkeit von einer Sitzposition der Person 16 beziehungsweise der Sitzanlage 14, das heißt in Abhängigkeit von einer Sitzeinstellung der Sitzanlage 14 mittels eines Aktors verstellt. Mit anderen Worten, die Sitzanlage 14 weist ein in Fig. 1 nicht erkennbares Sitzelement auf, auf das sich die Person 16 mit ihrem Gesäß setzen kann beziehungsweise auf dem die Person 16 mit ihrem Gesäß sitzt. Die Rückenlehne 18 ist dabei relativ zu dem Sitzelement verstellbar und/oder die Kopfstütze 20 ist relativ zu der Rückenlehne 18 und/oder relativ zu dem Sitzelement verstellbar, das heißt bewegbar. Die Kopfstütze 20, die Rückenlehne 18 und das Sitzelement sind Sitzteile der Sitzanlage 14, wobei zumindest zwei der Sitzteile der Sitzanlage 14 relativ zueinander bewegt, das heißt in unterschiedliche Stellungen relativ zueinander bewegt und in den unterschiedlichen Stellungen relativ zueinander fixiert werden können. Insbesondere können die Sitzteile mittels eines, insbesondere elektrischen, Antriebs relativ zueinander bewegt werden. Dabei ist es vorzugsweise vorgesehen, dass das jeweilige Leitelement 57 mittels eines, insbesondere elektrisch betreibbaren, Aktors relativ zu dem Gehäuse 36, insbesondere automatisch, in Abhängigkeit von den Stellungen, in die die Sitzteile relativ zueinander bewegt werden, bewegt wird, sodass das jeweilige Leitelement 57 insbesondere im Hinblick auf seine Position relativ zu dem Gehäuse 36, insbesondere automatisch, an die jeweiligen Stellungen angepasst wird, in die Sitzteile relativ zueinander bewegt werden. Dadurch kann sichergestellt werden, dass der Luftvorhang an beziehungsweise vor dem Mund- und Nasebereich 22 der Person 16 vorbeistreicht, sodass die Teilchen effektiv und effizient sowie gezielt abgeführt werden können. Mit anderen Worten wird das Leitelement 57 mittels des Aktors relativ zu dem Gehäuse 36, insbesondere automatisch, in Abhängigkeit von dem beziehungsweise einem relativ zueinander erfolgenden Verstellen der Sitzteile bewegt.

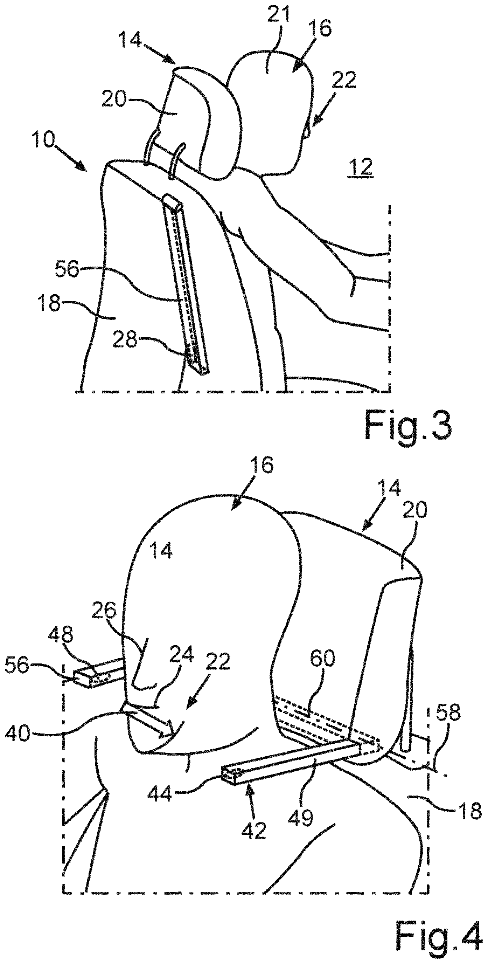

Fig. 2 und 3 zeigen eine zweite Ausführungsform der Vorrichtung 10 beziehungsweise des Kraftfahrzeugs. Bei der zweiten Ausführungsform ist die Ausströmöffnung 28 durch ein vorzugsweise eigensteifes Leitungselement 56, insbesondere direkt, gebildet beziehungsweise begrenzt. Dabei ist das Leitungselement 56 bewegbar an der Sitzanlage 14, insbesondere an der Rückenlehne 18, gehalten, insbesondere derart, dass das Leitungselement 56 und mit diesem die Ausströmöffnung 28 um eine Schwenkachse 58 relativ zu der Sitzanlage 14, insbesondere relativ zur Rückenlehne 18, verschwenkbar ist. Dies bedeutet, dass das Leitungselement 56 um die Schwenkachse 58 relativ zu der Sitzanlage 14 verschwenkt werden kann, während das Leitungselement 56 an der Sitzanlage 14 gehalten ist. Bei der zweiten Ausführungsform verläuft die Schwenkachse 58 zumindest im Wesentlichen in Fahrzeugquerrichtung. Das Leitungselement 56 begrenzt dabei den Luftkanal 48 und dessen Ausströmöffnung 28 jeweils direkt, sodass der Luftkanal 48 und die Ausströmöffnung 28 um die Schwenkachse 58 relativ zu der Sitzanlage 14 verschwenkbar sind. Das Leitungselement 56 ist dabei zwischen wenigstens einer in Fig. 2 gezeigten Gebrauchsstellung und wenigstens oder genau einer in Fig. 3 gezeigten Verstaustellung relativ zu der Sitzanlage 14 bewegbar, insbesondere verschwenkbar. Beispielsweise ist das Gebläse 32 an der Sitzanlage 14, insbesondere in der Sitzanlage 14, angeordnet. Dabei ist es insbesondere denkbar, dass das Gebläse 32 an und insbesondere in der Rückenlehne 18 angeordnet ist. Dabei ist beispielsweise das Gehäuse 36, durch welches die den Luftvorhang bildende Luft mittels des Gebläses 32 hindurch gefördert werden kann, fluidisch mit dem Luftkanal 48 verbunden, welcher beispielsweise stromab des Gehäuses 36 angeordnet ist.

In der in Fig. 3 gezeigten Verstaustellung liegt beispielsweise das Leitungselement 56 zumindest im Wesentlichen bündig an der Sitzanlage 14, insbesondere an der Rückenlehne 18, an.

Die Sitzanlage 14 kann in dem Innenraum 12 relativ zu einem den Innenraum 12 begrenzenden Aufbau des Kraftfahrzeugs bewegt werden, wobei der Aufbau vorzugsweise eine selbsttragende Karosserie ist. Da das Leitungselement 56 und vorzugsweise auch das Gebläse 32 nicht etwa aufbaufest, das heißt relativ zu dem Aufbau unbeweglich, sind, sondern da bei der zweiten Ausführungsform das Leitungselement 56 und vorzugsweise auch das Gebläse sitzfest sind, das heißt an der Sitzanlage 14 gehalten sind, sind das Leitungselement 56 und das Gebläse mit der Sitzanlage 14, insbesondere relativ zu dem Aufbau, mitbewegbar. Wird somit beispielsweise die Sitzanlage 14, insbesondere in Fahrzeuglängsrichtung, relativ zu dem Aufbau bewegt, so werden das Leitungselement 56 und das Gebläse mit der Sitzanlage 14 mitbewegt, sodass das Leitungselement 56 und das Gebläse 32 in unterschiedliche Sitzstellungen der Sitzanlage 14 relativ zu dem Aufbau mitbewegbar sind. Alternativ oder zusätzlich können die Sitzanlage 14 und mit dieser das Leitungselement 56 und das Gebläse 32 in Fahrzeughochrichtung relativ zu dem Aufbau bewegt werden. Unterschiedliche Sitzhöhen beziehungsweise unterschiedliche Torsolängen von unterschiedlichen Sitzinsassen können beispielsweise durch unterschiedliche Schwenkwinkel des Leitungselements 56, insbesondere relativ zur Rückenlehne 18, abgedeckt werden. Mit anderen Worten ist es denkbar, dass die Vorrichtung 10 einen, insbesondere elektrisch betreibbaren, weiteren Aktor aufweist, mittels welchem das Leitungselement 56, insbesondere unter Nutzung von elektrischem Strom, um die Schwenkachse 58 relativ zur Sitzanlage 14 verschwenkt werden kann. Hierdurch kann das Leitungselement 56 in unterschiedliche Stellungen relativ zu der Sitzanlage 14 bewegt, insbesondere verschwenkt, werden, wobei es vorzugsweise vorgesehen ist, dass das Leitungselement 56 in seine unterschiedlichen Stellungen relativ zu der Sitzanlage 14 fixiert werden kann. Dadurch kann das Leitungselement 56 insbesondere im Hinblick auf seine Schwenkwinkel relativ zur Sitzanlage 14 an unterschiedlich große Insassen angepasst werden.

Aus Fig. 2 und 3 ist erkennbar, dass bei der zweiten Ausführungsform das Sammelelement und somit die Auffangöffnung entfallen können. Bei der ersten und zweiten Ausführungsform ist die Ausströmöffnung 28 im Innenraum 12 des Kraftfahrzeugs angeordnet.

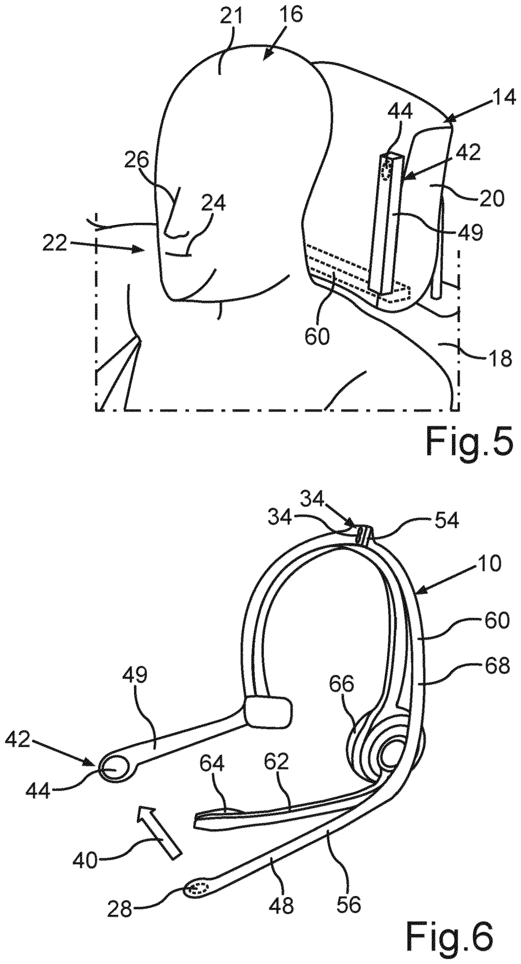

Fig. 4 und 5 zeigen eine dritte Ausführungsform der Vorrichtung 10 beziehungsweise des Kraftfahrzeugs. Insbesondere ist die dritte Ausführungsform beispielsweise eine Kombination der ersten Ausführungsform und der zweiten Ausführungsform, da bei der dritten Ausführungsform die Ausströmöffnung 28 sowie das Sammelelement 42 mit der Auffangöffnung 44 vorgesehen sind. Im Gegensatz zur zweiten Ausführungsform ist das Leitungselement 56 nicht an der Rückenlehne 18, sondern an der Kopfstütze 20 bewegbar, insbesondere verschwenkbar, gehalten. Dabei können die vorigen und folgenden Ausführungen zum Leitungselement 56 und zur Ausströmöffnung 28 auch ohne Weitere auf das Leitungselement 49 und die Auffangöffnung 44 übertragen werden. Dies bedeutet beispielsweise, dass das Leitungselement 49, welches die Auffangöffnung 44, insbesondere direkt, bildet, bewegbar, insbesondere verschwenkbar, an der Sitzanlage 14 und dabei beispielsweise an der Kopfstütze 20 gehalten sein kann. Somit ist beispielsweise das Sammelelement 42 beziehungsweise das Leitungselement 49 und die Auffangöffnung 44 derart bewegbar an der Sitzanlage 14, insbesondere der Kopfstütze 20, gehalten, dass das Leitungselement 49 und somit die Auffangöffnung 44 um eine Schwenkachse 58 relativ zur Sitzanlage 14 zwischen wenigstens einer in Fig. 4 gezeigten Gebrauchsstellung und wenigstens einer in Fig. 5 gezeigten Verstaustellung verschwenkbar sind. Entsprechendes kann auf das Leitungselement 56 mit der Ausströmöffnung 28 übertragen werden.

Wie zuvor bei der ersten Ausführungsform bereits angedeutet, kann das Leitungselement 49 einen weiteren Luftkanal begrenzen, der von dem Luftvorhangteil beziehungsweise von der den Luftvorhangteil bildenden Luft, die über die Auffangöffnung 44 in das Sammelelement 42 und dadurch in das Leitungselement 49 und somit in den weiteren Luftkanal einströmt, durchströmt werden kann. Dabei ist es denkbar, dass der Luftkanal 48 und der weitere Luftkanal über einen Verbindungskanal 60 fluidisch miteinander verbunden sind, wobei der Verbindungskanal 60 zumindest teilweise, insbesondere zumindest überwiegend oder vollständig, innerhalb der Sitzanlage 14, insbesondere innerhalb der Kopfstütze 20, verläuft. Dadurch, dass die Leitungselemente 56 und 49, insbesondere bewegbar und ganz insbesondere verschwenkbar an der Kopfstütze 20 gehalten sind, können die Ausströmöffnung 28 und die Auffangöffnung 44 besonders nahe an den Mund- und Nasebereich 22 angeordnet sein, insbesondere zumindest in der in Fig. 4 gezeigten Gebrauchsstellung der Leitungselemente 56 und 49. Das Gebläse 32, welches ein Luftförderaggregat sein kann, ist dabei beispielsweise in der Kopfstütze 20 angeordnet beziehungsweise untergebracht. Das Gebläse 32 fördert die den Luftvorhang bildende Luft durch den Luftkanal 48 und somit durch das Leitungselement 56 hindurch und in der Folge durch die Ausströmöffnung 28 hindurch, wodurch sich die Zwangsströmung beziehungsweise der Luftvorhang ausbildet. Dasselbe Gebläse, welches die Luft durch den Luftkanal 48 und dabei durch die Ausströmöffnung 28 hindurch fördert, saugt über die der Ausströmöffnung 28, insbesondere in Fahrzeugquerrichtung, gegenüberliegenden Auffangöffnung 44 zumindest den Luftvorhangteil beziehungsweise zumindest die den Luftvorhangteil bildende Luft an und in den weiteren Luftkanal ein und durch den weiteren Luftkanal hindurch, sodass mittels desselben Gebläses, mittels welchem die Luft durch die Ausströmöffnung 28 hindurch gefördert wird, die Teilchen über die Auffangöffnung 44 in das Sammelelement 42 eingesaugt werden. In der Folge fördert das Gebläse die Teilchen durch den weiteren Luftkanal und somit durch das Leitungselement 49 hindurch. Beispielsweise ist in dem auch als Querluftkanal bezeichneten Verbindungskanal 60 das Filterelement 54 angeordnet, mittels welchem die Teilchen aus der den weiteren Luftkanal und dann den Verbindungskanal 60 durchströmenden Luft herausgefiltert werden können. Es ist somit erkennbar, dass über den Luftkanal 48, den weiteren Luftkanal und den Verbindungskanal 60 ein Kreislauf geschlossen ist, in welchem oder über welchen die mittels des Gebläses 32 geförderte Luft zirkulieren kann.

Denkbar ist jedoch ohne Weiteres, dass der Verbindungskanal 60 entfällt. In diesem Fall werden beispielsweise die die Auffangöffnung 44 durchströmende und somit über die Auffangöffnung 44 in den weiteren Luftkanal einströmende und den weiteren Luftkanal durchströmende Luft und somit die die Auffangöffnung 44 durchströmenden, über die Auffangöffnung 44 in den weiteren Luftkanal einströmenden und den weiteren Luftkanal durchströmenden Teilchen, insbesondere an einem Ende des weiteren Luftkanals, abgeschieden und neue Luft wird mittels des Gebläses 32 und/oder mittels des weiteren Gebläses 50, insbesondere freisaugend, dem weiteren Luftkanal und somit dem Leitungselement 49 zugeführt. Somit ist es denkbar, dass mittels des zusätzlich zu dem Gebläse 32 vorgesehenen Gebläses 50 der Luftvorhangteil und somit die Teilchen über die Auffangöffnung 44 in den weiteren Luftkanal und somit in das Leitungselement 49 eingesaugt und durch das Leitungselement 49 hindurch gefördert werden.

Wie bereits angedeutet, können die Leitungselemente 56 und 49 bewegbar, insbesondere verschwenkbar, an der Sitzanlage 14, insbesondere an der Kopfstütze 20, gehalten sein, oder die Leitungselemente 56 und 49 sind relativ zu der Sitzanlage 14 unbeweglich.

Fig. 6 zeigt eine vierte Ausführungsform der Vorrichtung 10. Bei der vierten Ausführungsform ist die Vorrichtung 10 eine für sich alleine betrachtet zusammengebaute Einheit, welche für sich alleine betrachtet am Kopf 21 der Person 16 insbesondere nach Art einer auch als Headset bezeichneten Kopf- beziehungsweise Sprechgarnitur reversibel lösbar befestigt werden kann. Die Leitungselemente 56 und 49 sind dabei jeweilige Bügel, welche auch als Mund- und Nasenbügel bezeichnet werden. Die Vorrichtung 10 kann beispielsweise ferner ein insbesondere an einem Mikrofonbügel 62 gehaltenes Mikrofon 64 und wenigstens einen Lautsprecher 66 aufweisen. Wie beispielsweise bei der den Verbindungskanal 60 aufweisenden dritten Ausführungsform kann mittels ein und desselben Gebläses 32, mittels welchem die Luft zum Bilden des Luftvorhangs durch den Luftkanal 48 und somit durch das Leitungselement 56 und in der Folge durch die Ausströmöffnung 28 hindurch gefördert wird, zumindest der Luftvorhangteil beziehungsweise zumindest die den Luftvorhangteil bildende Luft über die Auffangöffnung 44 in den weiteren Luftkanal und somit in das Leitungselement 49 eingesaugt werden. Der Luftkanal 48 und der weitere Luftkanal sind dabei beispielsweise über den Verbindungskanal 60 fluidisch miteinander verbunden, in welchem das Gebläse 32 angeordnet ist. Dabei ist in dem Verbindungskanal 60 das Filterelement 54 angeordnet, welches stromab des Lüfterrads 34 beziehungsweise stromab des Gebläses 32 angeordnet ist. Beispielsweise kann die Person 16 einen insbesondere eigensteifen und zumindest den Verbindungskanal 60 begrenzenden Bügel 68 auf den Kopf 21 setzen und somit die Vorrichtung 10 reversibel lösbar an dem Kopf 21 befestigen.

Es ist erkennbar, dass die Vorrichtung 10 bei der vierten Ausführungsform eine portable Vorrichtung ist, welche von der Person 16 auch außerhalb des Innenraums 12 mitgeführt werden kann. Dabei ist es vorzugsweise vorgesehen, dass die Vorrichtung 10 einen beispielsweise als Batterie ausgebildeten Energiespeicher zum Speichern von elektrischer Energie beziehungsweise elektrischem Strom aufweist, wobei der Energiespeicher mit elektrischer Energie aufgeladen werden kann. Das Gebläse 32, insbesondere dessen Elektromotor, ist dabei mittels elektrischer Energie aus dem Energiespeicher betreibbar. Der Verbindungskanal 60 ist beispielsweise ein Luftschlauch, über welchen der Luftkanal 48 und der weitere Luftkanal und somit die Ausströmöffnung 28 und die Auffangöffnung 44 fluidisch miteinander verbunden sind.

In Ausführungsformen, bei denen auf das Sammelelement 42 und zugehörige Infrastruktur wie beispielsweise das weitere Gebläse 50 gegebenenfalls das Filterelement 54 und den weiteren Luftkanal und somit das Leitungselement 49 verzichtet wird, wirkt die aus der Ausströmöffnung 28 ausströmende Luft wie ein Luftvorhang, der die Person 16 und/oder andere Personen vor ausgestoßenen Teilchen schützt, insbesondere derart, dass mittels des Luftvorhangs die Teilchen von der Nase 26 und dem Mund 24 abgehalten werden. Insbesondere durch zumindest teilweises Auffangen des Luftvorhangs mittels des Sammelelements 42 können sowohl die Person 16 selbst vor von anderen Personen ausgestoßenen Teilchen geschützt werden, also auch die anderen Personen können vor von der Person 16 ausgestoßenen Teilchen geschützt werden.

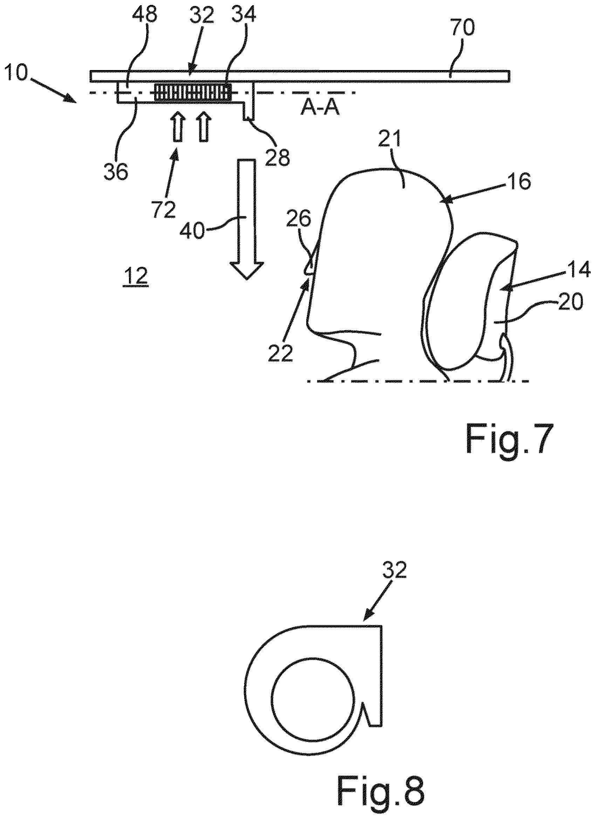

Fig. 7 und 8 zeigen eine fünfte Ausführungsform der Vorrichtung 10 beziehungsweise des Kraftfahrzeugs. Aus Fig. 7 ist ausschnittsweise ein Dachhimmel 70 erkennbar, durch welchen der Innenraum 12 in Fahrzeughochrichtung nach oben hin zumindest teilweise begrenzt ist. Der Dachhimmel 70 ist ein Verkleidungselement, durch welches beispielsweise ein Rohbaudach des Aufbaus in Fahrzeughochrichtung nach unten und somit zu dem Innenraum 12 hin zumindest teilweise verkleidet ist. Das Gebläse 32 ist an dem Dachhimmel 70 angeordnet und kann - wie in Fig. 7 durch Pfeile 72 veranschaulicht ist - Luft aus dem Innenraum 12 ansaugen, insbesondere in Fahrzeughochrichtung nach oben. Die mittels des Gebläses 32 angesaugte Luft wird durch das Gebläse 32, insbesondere durch dessen Gehäuse 36 und somit durch den durch das Gehäuse 36 begrenzten Luftkanal 48 hindurch gefördert und unter Ausbildung des Luftvorhangs - wie in Fig. 7 durch den Pfeil 40 veranschaulicht - durch die Ausströmöffnung 28 hindurch gefördert und somit über die Ausströmöffnung 28 aus dem Gehäuse 36 beziehungsweise aus dem Luftkanal 48 heraus gefördert. Dabei ist anhand des Pfeils 40 erkennbar, dass der Luftvorhang beziehungsweise dessen Strömungsrichtung in der in der durch die Fahrzeugquerrichtung und die Fahrzeughochrichtung aufgespannten Ebene verläuft und dabei in Fahrzeughochrichtung von oben nach unten verläuft. Der Luftvorhang streicht vor dem Mund- und Nasebereich 22 der Person 16 vorbei und schützt somit beispielsweise die Person 16 vor von anderen Personen ausgestoßenen Partikeln. Beispielsweise ist das Gebläse 32 als Radialgebläse ausgebildet, welches die Luft in axialer Richtung des Lüfterrads 34 ansaugt und in radialer Richtung des Lüfterrads 34 von dem Lüfterrad 34 weg fördert. Bei der fünften Ausführungsform stammt die mittels des Lüfterrads 34 angesaugte und geförderte Luft aus dem Innenraum 12.

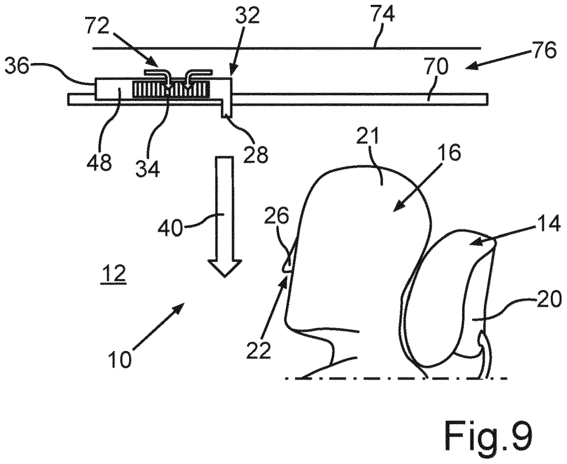

Schließlich zeigt Fig. 9 eine sechste Ausführungsform der Vorrichtung 10 beziehungsweise des Kraftfahrzeugs. In Fig. 9 ist ein Dachelement des Rohbaudachs mit 74 bezeichnet. Es ist erkennbar, dass der Dachhimmel 70 in Fahrzeughochrichtung von dem Dachelement 74 beabstandet ist, derart, dass in Fahrzeughochrichtung zwischen dem Dachhimmel 70 und dem Dachelement 74 ein Zwischenraum 76 angeordnet ist. In dem in Fahrzeughochrichtung nach oben hin, insbesondere direkt, durch das Dachelement 74 und in Fahrzeughochrichtung nach unten hin, insbesondere direkt, durch den Dachhimmel 70 angeordneten Zwischenraum 76 ist zumindest teilweise, insbesondere zumindest überwiegend oder vollständig, das Gebläse 32 angeordnet. Es ist erkennbar, dass das Gebläse 32 beziehungsweise das Lüfterrad 34 Luft nicht direkt aus dem Innenraum 12, sondern aus dem Zwischenraum 76 ansaugt, durch das Gehäuse 36 hindurch fördert und durch die Ausströmöffnung 28 hindurch fördert. Über die Ausströmöffnung 28 mündet der Luftkanal 48, insbesondere direkt, in den Innenraum 12, sodass die die Ausströmöffnung 28 durchströmende und somit über die Ausströmöffnung 28 aus dem Luftkanal 48 ausströmende Luft - wie in Fig. 9 durch den Pfeil 40 veranschaulicht - den Luftvorhang bildet. Bei der sechsten Ausführungsform wird somit die mittels des Gebläses 32 geförderte Luft außerhalb des eigentlichen Innenraums 12 und dabei in einem Bereich zwischen dem Dachelement 74 und dem als Dachverkleidung fungierenden Dachhimmel 70 angesaugt. Die Ausströmöffnung 28 ist beispielsweise ein schmaler Luftschlitz, über welchen das Gebläse 32 die mittels des Gebläses 32 geförderte Luft aus dem Gehäuse 36 ausbläst. Hierdurch entsteht eine in erster Näherung in Fahrzeughochrichtung nach unten gerichtete Luftströmung, die als der Luftvorhang vor Nase 26 und Mund 24 der Person 16 wirkt und in der Folge die Person 16 vor Einatmung von Tröpfchen und/oder Partikeln, die durch die Atemluft anderer, sich im Innenraum 12 aufhaltender Personen ausgestoßen wurden, schützt.

## Patentansprüche

1. Kraftfahrzeug, mit wenigstens einem im Innenraum (12) des Kraftfahrzeugs angeordneten Sitzplatz für eine Person (16), wobei das Kraftfahrzeug wenigstens eine Vorrichtung (10) zum gezielten Abführen von Tröpfchen und/oder Partikeln umfasst, welche aufweist:
- wenigstens eine im Innenraum (12) angeordnete Ausströmöffnung (28); und
- wenigstens ein Gebläse (32), mittels welchem Luft durch die Ausströmöffnung (28) hindurch zu fördern ist, wodurch mittels der Vorrichtung (10) in dem Innenraum (12) ein durch die mittels des Gebläses (32) geförderte Luft gebildeter, gezielt gerichteter und sich vor einem Mund- und Nasebereich (22) der auf dem Sitzplatz sitzenden Person (16) ausbildender Luftvorhang (40), welcher in einer Ebene, welche durch die Fahrzeugquerrichtung und die Fahrzeughochrichtung aufgespannt ist, verläuft, zum Abführen der Tröpfchen und/oder Partikeln bereitstellbar ist; und
- wenigstens ein Sammelelement (42) mit wenigstens einer der Ausströmöffnung (28) gegenüberliegenden und in dem Innenraum (12) angeordneten Auffangöffnung (44), mittels welcher zumindest ein Teil des Luftvorhangs (40) und dadurch zumindest ein Teil der mittels des Luftvorhangs (40) abgeführten und gezielt zu der Auffangöffnung (44) hin geführten Tröpfchen und/oder Partikel gezielt auffangbar sind;
**dadurch gekennzeichnet, dass**
der Luftvorhang (40), dessen Strömungsrichtung in Fahrzeugquerrichtung und dabei zu der der Ausströmöffnung (28) in Fahrzeugquerrichtung gegenüberliegenden Auffangöffnung (44) hin verläuft, in einer Ebene, welche durch die Fahrzeugquerrichtung des Kraftfahrzeugs und die Fahrzeughochrichtung des Kraftfahrzeugs aufgespannt ist, verläuft.

2. Kraftfahrzeug nach Anspruch 1,
**dadurch gekennzeichnet, dass**
das Sammelelement (42) ein zusätzlich zu dem Gebläse (32) vorgesehenes,
weiteres Gebläse (50) aufweist, mittels welchem zumindest der Teil des Luftvorhangs (40) und dadurch zumindest der Teil der mittels des Luftvorhangs (40) abgeführten und gezielt zu der Auffangöffnung hin geführten Tröpfchen und/oder Partikel in die Auffangöffnung (44) einsaugbar sind.

3. Kraftfahrzeug nach Anspruch 1 oder 2,
**dadurch gekennzeichnet, dass**
das Sammelelement (42) ein Filterelement (54) zum Filtern zumindest des mittels der Auffangöffnung (44) aufgefangenen Teils des Luftvorhangs (40) aufweist.

4. Kraftfahrzeug nach Anspruch 3,
**dadurch gekennzeichnet, dass**
das Filterelement (54) dazu ausgebildet ist, Tröpfchen und/oder Partikel mit einem Durchmesser von weniger als fünf Mikrometern rückzuhalten und dadurch aus dem aufgefangenen Teil des Luftvorhangs (40) herauszufiltern.

5. Kraftfahrzeug nach einem der vorhergehenden Ansprüche,
**dadurch gekennzeichnet, dass**
die Ausströmöffnung (28) durch ein Leitungselement (36, 56) gebildet ist, wobei die Vorrichtung (10) wenigstens ein Luftleitelement (57) aufweist, welches relativ zu dem Leitungselement (36, 56) bewegbar, insbesondere verschwenkbar, ist, wodurch eine Strömungsrichtung der die Ausströmöffnung (28) durchströmenden Luft variierbar ist.

6. Kraftfahrzeug nach einem der vorhergehenden Ansprüche,
**dadurch gekennzeichnet, dass**
die Ausströmöffnung (28) und/oder die Auffangöffnung (44) an einer im Innenraum (12) des Kraftfahrzeugs angeordneten Sitzanlage (14) angeordnet ist.

7. Verfahren zum Betreiben eines Kraftfahrzeugs nach einem der vorhergehenden Ansprüche.

## Claims

1. Motor vehicle, having at least one seat for a person (16) which is arranged in the interior (12) of the motor vehicle, the motor vehicle comprising at least one device (10) for the targeted removal of droplets and/or particles, which has:
- at least one outlet opening (28) arranged in the interior (12); and
- at least one fan (32), by means of which air is to be conveyed through the outlet opening (28), whereby, by means of the device (10), an air curtain (40) can be provided in the interior (12) for removing the droplets and/or particles, which air curtain is formed by the air conveyed by means of the fan (32), is directed in a targeted manner, is formed in front of a mouth and nose area (22) of the person (16) sitting on the seat, and extends in a plane which is spanned by the vehicle transverse direction and the vehicle vertical direction; and
- at least one collecting element (42) with at least one collecting opening (44) which is opposite the outlet opening (28) and is arranged in the interior space (12) and by means of which at least part of the air curtain (40) and thus at least some of the droplets and/or particles removed by means of the air curtain (40) and guided in a targeted manner to the collecting opening (44) can be collected in a targeted manner;
**characterized in that**
the air curtain (40), the flow direction of which extends in the vehicle transverse direction and toward the collecting opening (44) opposite the outlet opening (28) in the vehicle transverse direction, extends in a plane which is spanned by the vehicle transverse direction of the motor vehicle and the vehicle vertical direction of the motor vehicle.

2. Motor vehicle according to claim 1,
**characterized in that**
the collecting element (42) has a further fan (50) provided in addition to the fan (32), by means of which further fan at least part of the air curtain (40) and thereby at least some of the droplets and/or particles removed by means of the air curtain (40) and guided in a targeted manner toward the collecting opening can be sucked into the collecting opening (44).

3. Motor vehicle according to either claim 1 or 2,
**characterized in that**
the collecting element (42) has a filter element (54) for filtering at least the part of the air curtain (40) collected by means of the collecting opening (44).

4. Motor vehicle according to claim 3,
**characterized in that**
the filter element (54) is designed to retain droplets and/or particles having a diameter of less than five micrometers and thus to filter them out of the collected part of the air curtain (40).

5. Motor vehicle according to any of the preceding claims,
**characterized in that**
the outlet opening (28) is formed by a line element (36, 56), the device (10) having at least one air guide element (57) which is movable, in particular pivotable, relative to the line element (36, 56), whereby a flow direction of the air flowing through the outlet opening (28) can be varied.

6. Motor vehicle according to any of the preceding claims,
**characterized in that**
the outlet opening (28) and/or the collecting opening (44) is arranged on a seat system (14) arranged in the interior (12) of the motor vehicle.

7. Method for operating a motor vehicle according to any of the preceding claims.

## Revendications

1. Véhicule automobile, comportant au moins une place assise pour une personne (16) disposée dans l'espace intérieur (12) du véhicule automobile, dans lequel le véhicule automobile comprend au moins un dispositif (10) pour l'évacuation ciblée de gouttelettes et/ou de particules, lequel dispositif présente :
- au moins une ouverture de sortie (28) disposée dans l'espace intérieur (12) ; et
- au moins une soufflante (32), à l'aide de laquelle de l'air peut être transporté à travers l'ouverture de sortie (28), moyennant quoi, à l'aide du dispositif (10), dans l'espace intérieur (12), un rideau d'air (40), formé par l'air transporté à l'aide de la soufflante (32), orienté de manière ciblée et se formant devant une zone buccale et nasale (22) de la personne (16) assise sur la place assise, lequel rideau d'air s'étend dans un plan qui est défini par la direction transversale de véhicule et par la direction verticale de véhicule, peut être mis à disposition pour l'évacuation des gouttelettes et/ou des particules ; et
- au moins un élément collecteur (42) comportant au moins une ouverture de récupération (44) opposée à l'ouverture de sortie (28) et disposée dans l'espace intérieur (12), à l'aide de laquelle ouverture de récupération au moins une partie du rideau d'air (40) et ainsi au moins une partie des gouttelettes et/ou particules évacuées à l'aide du rideau d'air (40) et guidées de manière ciblée vers l'ouverture de récupération (44) peuvent être récupérées de manière ciblée ;
**caractérisé en ce que**
le rideau d'air (40), dont la direction d'écoulement s'étend dans la direction transversale de véhicule et ainsi vers l'ouverture de récupération (44) opposée à l'ouverture de sortie (28) dans la direction transversale de véhicule, s'étend dans un plan qui est défini par la direction transversale de véhicule du véhicule automobile et par la direction verticale de véhicule du véhicule automobile.

2. Véhicule automobile selon la revendication 1,
**caractérisé en ce que**
l'élément collecteur (42) présente une autre soufflante (50) prévue en plus de la soufflante (32), à l'aide de laquelle autre soufflante au moins la partie du rideau d'air (40) et ainsi au moins la partie des gouttelettes et/ou particules évacuées à l'aide du rideau d'air (40) et guidées de manière ciblée vers l'ouverture de récupération peuvent être aspirées dans l'ouverture de récupération (44).

3. Véhicule automobile selon la revendication 1 ou 2,
**caractérisé en ce que**
l'élément collecteur (42) présente un élément de filtrage (54) pour le filtrage d'au moins la partie du rideau d'air (40) récupérée à l'aide de l'ouverture de récupération (44).

4. Véhicule automobile selon la revendication 3,
**caractérisé en ce que**
l'élément de filtrage (54) est conçu pour retenir des gouttelettes et/ou des particules comportant un diamètre inférieur à cinq micromètres et pour ainsi filtrer la partie récupérée du rideau d'air (40).

5. Véhicule automobile selon l'une des revendications précédentes,
**caractérisé en ce que**
l'ouverture de sortie (28) est formée par un élément de conduite (36, 56), dans lequel le dispositif (10) présente au moins un élément de guidage d'air (57) qui peut être déplacé, en particulier pivoté, par rapport à l'élément de conduite (36, 56), moyennant quoi une direction d'écoulement de l'air s'écoulant à travers l'ouverture de sortie (28) peut être modifiée.

6. Véhicule automobile selon l'une des revendications précédentes,
**caractérisé en ce que**
l'ouverture de sortie (28) et/ou l'ouverture de récupération (44) sont disposées sur une installation de siège (14) disposée dans l'espace intérieur (12) du véhicule automobile.

7. Procédé permettant de faire fonctionner un véhicule automobile selon l'une des revendications précédentes.
